# EUROPEAN PATENT SPECIFICATION

(11) **EP 0 374 506 B1**
(45) Date of publication and mention of the grant of the patent: **02.03.1994**
(21) Application number: 89121614.5
(22) Date of filing: 23.11.1989
(51) Int. Cl.: H02H 3/33

(54) **Emergency remote opening device, particularly for differential switches**
Not-Fernöffner, insbesondere für Differentialschalter
Dispositif de coupure à distance de secours, en particulier pour interrupteurs différentiels

(30) Priority: 23.12.1988 IT 2308388
(43) Date of publication of application: 27.06.1990
(73) Proprietor: ABB Elettrocondutture S.p.A., I-20127 Milano (IT)
(72) Inventor: Giardini, Giorgio, I-20127 Milan (IT)
(74) Representative: Modiano, Guido, Dr.-Ing.

(56) References cited:
- DE-C- 875 680
- FR-A- 2 586 137

## Description

The present invention relates to an emergency remote opening device, particularly for differential switches.

As is known, it is convenient to provide electrical devices in general and differential switches in particular with a device for protection against contact voltage in order to cause an opening and consequently the interruption of the current in the protected electric circuit, if emergency conditions arise, by means of an adapted button which the operator or user can actuate when he perceives an impending danger.

According to the current rules, said protection devices must have intrinsic safety; i.e., if any of the parts which compose them fails, the switch controlled thereby must turn to a safety condition, interrupting the circuit.

Minimum-voltage relays are currently used to solve the problem; said relays do not activate the switch so long as the coil which energizes them is excited but open the protected electric circuit when the current is interrupted either by actuating a button provided with a normally closed contact which is opened or when the winding of the coil is interrupted or a conductor or any point of its circuit is interrupted.

The use of the minimum-voltage coil, which is valid from a strictly functional standpoint, is disadvantageous since such a coil is excessively expensive and bulky, and can furthermore cause unwanted cutoffs of the protected circuit, if a voltage supply lack occurs even for extremely short times and for causes unrelated to the protected circuit. When the supply voltage returns, the protected switch must in fact be reset manually, since the lack of power supply to the minimum-voltage coil has instantaneously deactivated the protected switch.

The aim of the invention is indeed to solve the above described problem by providing a device which achieves the above mentioned functional advantages of a minimum-voltage coil without however having the disadvantages thereof.

Within the scope of the above described aim, a particular object of the invention is to provide a device which is particularly suitable for differential switches, i.e. switches which are sensitive to the zero sequences of line currents, regardless of whether they are provided or not with overcurrent circuit breakers.

Another object of the present invention is to provide a device which can be easily used in any bipolar, three-polar or quadripolar protection or actuation device provided with a current adder transformer which feeds an actuator of the circuit breaker type.

Another object of the present invention is to provide a device which by virtue of its peculiar constructive characteristics is easily obtainable starting from commonly commercially available elements and materials and is furthermore competitive from a merely economical point of view.

The above described aim, the objects mentioned and others which will become apparent hereinafter are achieved by an emergency remote opening device, as defined in appended claims 1 and 2.
The characteristics and advantages will become apparent from the description of two preferred but not exclusive embodiments of emergency remote opening devices, particularly for differential switches, illustrated only by way of non-limitative example in the accompanying drawings, wherein:
figure 1 is a schematic view of a remote opening device without positive safety;
figure 2 is a schematic view of the positive-safety remote opening device according to the invention;
figure 3 is a view of a remote opening device with partial positive safety.

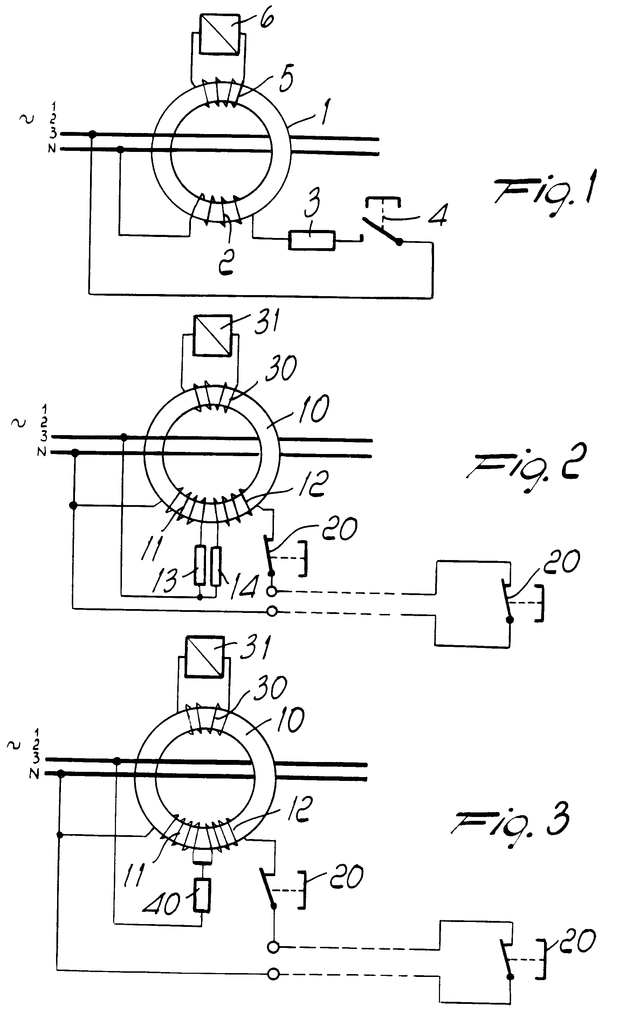

With reference to the above figures, and in particular with reference to figure 1, an electric circuit is schematically illustrated, comprising a current adder transformer 1 and a winding 2 wound around its core; a resistor 3 and a closure button 4 are arranged in series to said winding 2 and to one another and are supplied by an alternating voltage.

Said circuit provides a testing device which is mandatory according to the current rules concerning differential switches.

With this device, if the user closes the test button 4 a current limited by the resistor 3 circulates in the coils of the winding 2 which is wound on the transformer 1 and produces a flux which concatenates with a further winding 5 which thus generates an electromotive force which is applied to a circuit breaker 6, causing its disconnection and therefore the opening of the switch.

With said device it is possible to arrange other buttons in parallel to the test button 4, placing said buttons in other rooms.

Said devices, however, have no positive safety, since the interruption of the resistor or of the winding or of any lead would disable the switch remote opening control.

According to an embodiment of the present invention, which is illustrated in figure 2, a first 11 and a second winding 12 are wound on the core 10 of the transformer, which is made of ferromagnetic material and may be constituted by the very transformer of the differential switch; said windings have the same number of turns and are wound in opposite directions.

Impedances 13 and 14 are arranged in series respectively to the first and to the second windings 11, 12; said impedances may be ohmic, capacitive or inductive, and merely have the function of limiting the current which flows through them.

The windings, with their associated impedances, are mutually connected in parallel and are connected in particular to an alternating voltage source which may be directly constituted by the mains line.

At least one button, indicated at 20, or possibly a plurality of variously located buttons, is connected in series to one of said windings 11 and 12 and possibly to each other.

The two circuits, which are in parallel to one another, in practice create two opposite fluxes, and since the number of turns of the windings is equal and opposite and the two impedances are identical, a nil resulting flux is consequently generated.

A secondary winding 30 is furthermore wound around the core 10 and drives an actuator comprising a circuit breaker 31.

In normal operating conditions, the currents which circulate in the windings 11 and 12 cause no effect, since the fluxes compensate one another and the flux concatenated by the secondary winding 30 is consequently nil.

If one of the buttons 20 is opened, the current which circulates on the winding which is in series to the opened button is interrupted, and the current which circulates in the other winding consequently produces a flux which, being concatenated by the secondary winding, actuates the circuit breaker 31.

In this manner a positive-safety remote opening control is obtained for the switch, since if any of its components is interrupted due to failure the switch opens immediately, placing the entire protected circuit in safety conditions.

With reference to figure 3, a simplified circuit is provided in which the two mutually opposite windings 11 and 12 are connected, at a common terminal, to a single impedance, indicated at 40, which is connected to the mains so as to arrange the power supply of the two windings in parallel.

In this case the device would have positive safety in case of interruptions of the button and of the windings, but would not have positive safety as regards failures at the single impedance.

From what has been described above it can thus be seen that the invention achieves the proposed aims, and in particular the fact is stressed that with extremely simple means it is possible to provide a device with positive safety which is not affected by accidental external factors such as brief power cuts.

The invention thus conceived is susceptible to numerous modifications and variations, all of which are within the scope of the inventive concept.

All the details may furthermore be constituted by other technically equivalent elements.

In practice, the materials employed, so long as compatible with the specific use, as well as the dimensions and the contingent shapes, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An emergency remote opening device, particularly for differential switches, characterized in that it comprises a core (10) of ferromagnetic material on which a first and a second winding (11, 12) are wound, at least one normally-closed opening button (20) provided in series to one of said windings (11, 12), and a further winding (30) provided on said core (10), which further winding concatenates the flux generated by said first and second windings (11, 12), said first and second windings (11, 12) generating, in normal operating conditions when said button (20) is closed, magnetic fluxes which compensate one another and producing when said button (20) is open a net magnetic flux which drives an actuator (31).

2. An emergency remote opening device, particularly for differential switches, characterized in that it comprises a core (10) of ferromagnetic material on which a first and a second winding (11, 12) are wound, said windings being mutually opposite and having the same number of turns, said first and second windings (11, 12) being connected in parallel to an electric power supply source, at least one normally-closed opening button (20) provided in series to one of said windings, and a further winding (30) provided on said core (10), which further winding concatenates the flux generated by said first and second windings (11, 12), said first and second windings (11, 12) generating, in normal operating conditions when said button (20) is closed, magnetic fluxes which compensate one another and producing when said button (20) is open a net magnetic flux which drives an actuator (31).

3. An emergency device, according to any of the preceding claims, characterized by two equal impedances (13, 14) which are connected in series respectively to said first and second windings (11, 12).

4. An emergency device, according to any of the preceding claims, characterized in that said actuator (31) comprises a circuit breaker.

5. An emergency device, according to any of the preceding claims, characterized in that said first and second windings (11, 12) are connected to a line protected by a differential switch.

6. An emergency device, according to any of claims 1, 2, 4, 5, characterized in that said first and second windings (11, 12) are connected to said power supply source through a single impedance (40).

## Patentansprüche

1. Not-Fernöffnungseinrichtung, insbesondere für Differentialschalter, dadurch gekennzeichnet, daß sie einen Kern (10) aus ferro-magnetischem Material, auf dem eine erste und eine zweite Wicklung (11, 12) gewickelt sind, wenigstens eine normalerweise geschlossene Öffnungstaste (20), die in Reihe mit einer dieser Wicklungen (11, 12) vorgesehen ist, und eine weitere Wicklung (30) auf diesem Kern (10) umfasst, wobei diese weitere Wicklung den Fluß durch diese ersten und zweiten Wicklungen (11, 12) verknüpft, und diese ersten und zweiten Wicklungen (11, 12) unter normalen Arbeitsbedingungen, wenn diese Taste (20) geschlossen ist, magnetische Flüsse erzeugen, die einander kompensieren, und, wenn die Taste (20) offen ist, einen magnetischen Nettofluß erzeugen, der ein Betätigungsglied (31) betreibt.

2. Not-Fernöffnungseinrichtung, insbesondere für Differentialschalter, dadurch gekennzeichnet, daß nie einen Kern (10) aus ferro-magnetischem Material umfasst, auf den eine erste und zweite Wicklung (11, 12) gewickelt sind, diese Wicklungen einander entgegengesetzt sind und die gleiche Anzahl von Windungen haben, diese ersten und zweiten Wicklungen (11, 12) parallel mit einer elektrischen Stromquelle gelegt sind, wobei eine normalerweise geschlossene Öffnungstaste (20) in Reihe zu einer dieser Wicklungen liegt und eine weitere Wicklung (30) auf diesem Kern (10) vorgesehen ist, wobei diese weitere Wicklung den Fluß verknüpft, der durch diese ersten und zweiten Wicklungen (11, 12) erzeugt wurde, und diese ersten und zweiten Wicklungen (11, 12) unter normalen Arbeitsbedingungen, wenn diese Taste (20) geschlossen ist, magnetische Flüsse erzeugen, die einander kompensieren, und, wenn die Taste (20) offen ist, einen magnetischen Nettofluß erzeugen, der ein Betätigungsglied (31) betreibt.

3. Not-Einrichtung nach einem der vorhergehenden Ansprüche, gekennzeichnet durch zwei gleiche Impedanzen (13, 14), die in Reihe jeweils mit diesen ersten und zweiten Wicklungen (11, 12) geschaltet sind.

4. Not-Einrichtung nach einem der vorhergehenden Ansprüche, dadurch gekennzeichnet, daß dieses Betätigungsglied (31) eine Unterbrecherschaltung bzw. einen Überstromschalter umfasst.

5. Not-Einrichtung nach einem der vorhergehenden Ansprüche, dadurch gekennzeichnet, daß diese ersten und zweiten Wicklungen (11, 12) mit einer durch einen Differentialschalter geschützten Leitung verbunden sind.

6. Not-Fernöffner nach einem der Ansprüche 1, 2, 4 oder 5, dadurch gekennzeichnet, daß diese ersten und zweiten Wicklungen (11, 12) mit dieser Stromquelle über eine einzige Impedanz (40) verbunden sind.

## Revendications

1. Dispositif de coupure à distance de secours, en particulier pour des interrupteurs différentiels, caractérisé en ce qu'il comprend un noyau (10) en matériau ferromagnétique, sur lequel sont enroulés des premier et second enroulements (11, 12), au moins un bouton de coupure (20) normalement fermé, prévu en série avec l'un desdits enroulements (11, 12) et un enroulement (30) supplémentaire, prévu sur ledit noyau (10), cet enroulement supplémentaire combinant le flux produit par lesdits premier et second enroulements (11, 12), lesdits premier et second enroulements (11, 12) produisant, dans des conditions de fonctionnement normales lorsque ledit bouton (20) est fermé, des flux magnétiques qui se compensent entre eux et produisant, lorsque ledit bouton (20) et ouvert, un flux magnétique résultant, qui pilote un organe d'actionnement (31).

2. Dispositif de coupure à distance de secours, en particulier pour des interrupteurs différentiels, caractérisé en ce qu'il comprend un noyau (10) en matériau ferromagnétique sur lequel sont enroulés des premier et second enroulements (11, 12), lesdits enroulements étant mutuellement opposés et présentant le même nombre de tours, lesdits premier et second enroulements (11, 12) étant reliés en parallèle à une source d'alimentation en puissance électrique, au moins un bouton d'ouverture (20) normalement fermé, prévu en série avec l'un desdits enroulements et un enroulement (30) supplémentaire, prévu sur ledit noyau (10), cet enroulement supplémentaire combinant le flux produit par lesdits premier et second enroulements (11, 12) en produisant, dans des conditions de fonctionnement normales, lorsque ledit bouton (20) est fermé, des flux magnétiques qui se compensent entre eux , produisant, lorsque ledit bouton (20) et ouvert, un flux magnétique résultant, pilotant un organe d'actionnement (31).

3. Dispositif de secours selon l'une des revendications précédentes, caractérisé par deux impédances (13, 14) égales, respectivement reliées en série auxdits premier et second enroulements (11, 12).

4. Dispositif dc secours selon l'une quelconque des revendications précédentes, caractérisé en ce que ledit organe d'actionnement (31) comprend un dispositif de coupure de circuit.

5. Dispositif de secours selon l'une quelconque des revendications précédentes, caractérisé en ce que lesdits premier et second enroulements (11, 12) sont reliés à une ligne protégée par un interrupteur différentiel.

6. Dispositif de secours selon l'une quelconque des revendications 1, 2, 4, 5, caractérisé en ce que lesdits premier et second enroulements (11, 12) sont reliés à ladite source d'alimentation en puissance, par l'intermédiaire d'une impédance (40) unique.
